# EUROPEAN PATENT APPLICATION

(11) **EP 4 759 685 A1**
(43) Date of publication of application: **17.06.2026**
(21) Application number: 25222179.1
(22) Date of filing: 10.12.2025
(51) Int. Cl.: B62D 35/00, B62D 37/02

(54) **VEHICLE PROVIDED WITH A MOVABLE AERODYNAMIC ELEMENT**

(30) Priority: 12.12.2024 IT 202400028248
(71) Applicant: FERRARI S.p.A., 41100 Modena (IT)
(72) Inventor: DI TOMMASO, Salvatore, 41100 MODENA (IT); CAPUANO, Luigi, 41100 MODENA (IT); MULTARI, Daniele, 41100 MODENA (IT); TOSETTI, Federico, 41100 MODENA (IT); COLZI, Gianluca, 41100 MODENA (IT)
(74) Representative: Studio Torta S.p.A.

(57) **Abstract**

A vehicle (1) having: a body (5); at least one aerodynamic element (6), which is movable between a first position and a second position different from the first position and is provided with at least one limit stop buffer (8), which is integral with the aerodynamic element (6) and rests against a respective striker body (9), when the aerodynamic element (6) is in the first position; and an electromagnet (10) configured to generate a magnetic attraction force between the limit stop buffer (8) and the striker body (9).

## Description

### CROSS-REFERENCE TO RELATED APPLICATIONS

This patent application claims priority from Italian patent application no. 102024000028248 filed on December 12, 2024, the entire disclosure of which is incorporated herein by reference.

### TECHNICAL FIELD

The present invention relates to a vehicle, in particular a car, provided with a movable aerodynamic element.

### PRIOR ART

In high-performance cars, aerodynamics is designed to generate a high aerodynamic downforce (namely a high aerodynamic downward thrust) trying, at the same time, to minimise the aerodynamic drag to advancement. Consequently, the aerodynamic efficiency of a car is evaluated as a function of the ratio of the aerodynamic downforce and the corresponding aerodynamic drag to advancement: the higher this ratio, the greater the aerodynamic efficiency of the car.

In order to increase the aerodynamic downforce on the rear axle, it is known to apply to the body a (at least one) rear spoiler, namely an aerodynamic element that comes out of the outline of the body and deflects the airflow upwards. It is important to note that the rear spoiler is a *"whisker"* that protrudes upwards from the body and constitutes a seamless extension of the body; consequently, the airflow is forced to pass over the rear spoiler, namely to pass above the rear spoiler, with no possibility of passing under the rear spoiler.

As an alternative to applying a rear spoiler to the body, it is possible to apply to the body a (at least one) rear wing, which comprises at least one wing profile that is arranged at a certain distance from the rest of the body and is generally supported by a central support or two side supports; the wing profile is hit by the airflow both at its upper surface and at its lower surface and generates downforce using the same physical principle that allows airplanes to fly.

In order to increase the aerodynamic downforce only when necessary (namely to avoid increasing the aerodynamic drag to advancement when not necessary), an aerodynamic element (a spoiler or a wing) can be mounted movable so as to move between a rest position, in which the aerodynamic element is arranged flush with the rest of the body, and a working position, in which the aerodynamic element is extracted with respect to the rest of the body.

When a movable aerodynamic element is in the rest position, it can be subject to small movements with respect to the rest position by effect of the sum of all the clearances present in the kinematic chain connecting the movable aerodynamic element to the corresponding actuator device. Therefore, during the driving of the car and by effect of the turbulent action of the air, the movable aerodynamic element that is in the rest position can vibrate, generating noise. Furthermore, when the car is parked, when touching the movable aerodynamic element which is in the rest position, a person can sense an instability thereof which gives (actually erroneously) the feeling of scarce solidity or breakage.

Patent DE10347449B4 describes a car equipped with a spoiler which is arranged on the rear hood of the engine compartment and can be raised to enable accessing the engine through an opening for maintenance and repair. The spoiler is locked in position when it is in the normal driving position by means of a locking device consisting of an electromagnetic actuator with a locking pin and a pawl fixed to the spoiler 24.

Patent KR100391681B1 describes a car comprising an aerodynamic braking system provided with at least one spoiler which is pushed towards the outside of the body (namely in a braking position) by a spring and is held inside the body (namely in an inactive position) by a magnetic coupling; the magnetic coupling provides for the use of a permanent magnet integral with the spoiler, which normally keeps the spoiler inside the body, and of an electromagnet which is separate from and independent of the permanent magnet and is activated to generate an electromagnetic force that cancels the action of the permanent magnet and allows the spoiler to move towards the outside of the body pushed by the spring.

### DESCRIPTION OF THE INVENTION

The object of the present invention is to provide a vehicle provided with a movable aerodynamic element which is kept in a stable manner (namely without undesired movements) in a rest position, in which the aerodynamic element is arranged flush with the rest of the body.

According to the present invention, a vehicle provided with a movable aerodynamic element is provided, according to what claimed by the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting embodiment thereof, wherein:
- Figure 1 is a schematic plan view of a car provided with two rear spoilers;
- Figure 2 is top view of a rear part of the car of Figure 1;
- Figures 3 and 4 are two side views of a rear spoiler in a rest position and in a working position, respectively; and
- Figure 5 is a schematic view of a limit stop buffer of a rear spoiler.

### PREFERRED EMBODIMENTS OF THE INVENTION

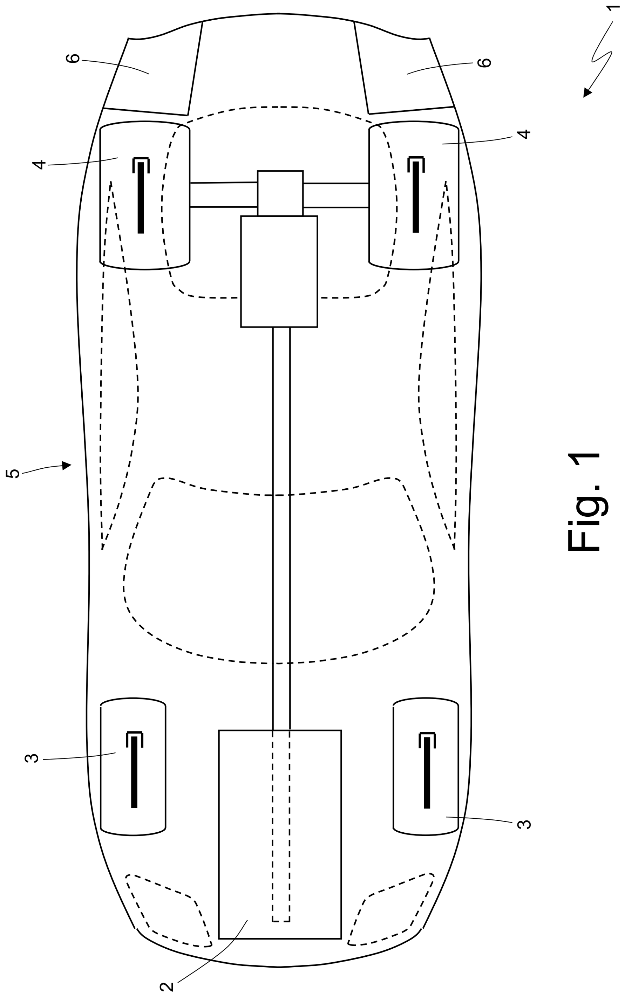

In Figure 1, reference numeral 1 indicates, as a whole, a road vehicle, in particular a car, propelled by an internal combustion engine 2 arranged in front position. The road vehicle 1 comprises a frame, which supports the internal combustion engine 2, a pair of front wheels 3, and a pair of rear drive wheels 4. The frame is covered by a body 5 which comprises both transparent elements (a windshield, movable and/or fixed side windows, a rear window), and opaque elements made of sheet metal, plastic material or composite material.

Between the front wheels 3 and the rear wheels 4 a passenger compartment is obtained which is accessed through a pair of doors (which are part of the body 5). In front of the passenger compartment a front compartment (namely an engine compartment) is obtained which houses the internal combustion engine 2 and is closed by a front hood (which is part of the body 5).

In the embodiment illustrated in the accompanying figures, the internal combustion engine 2 of the road vehicle 1 is arranged in a front position (namely in front of the passenger compartment); according to a different and perfectly equivalent embodiment not illustrated, the internal combustion engine 2 of the road vehicle 1 is arranged in a central/rear position (namely behind the passenger compartment).

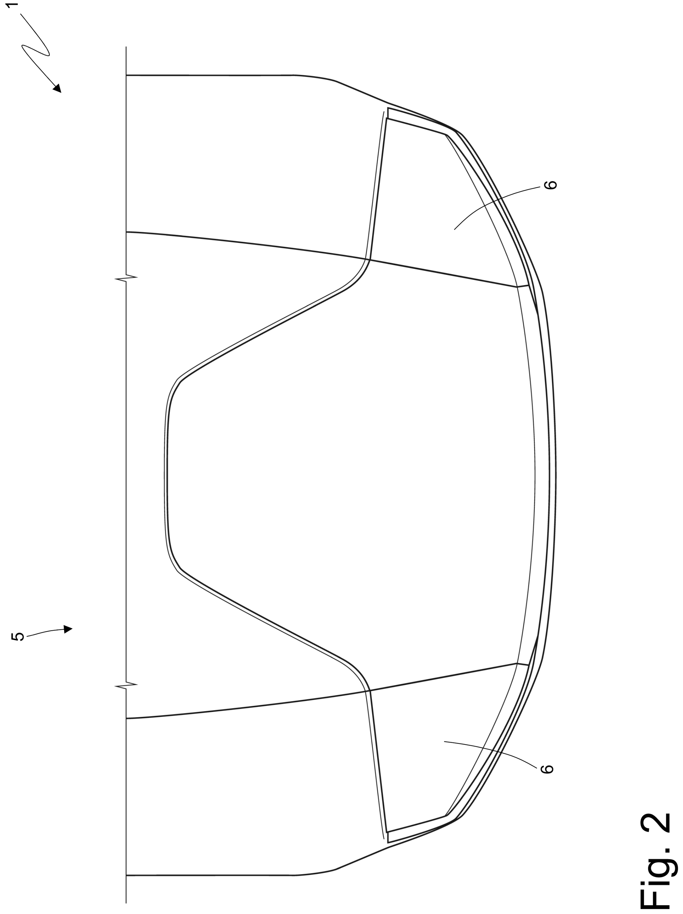

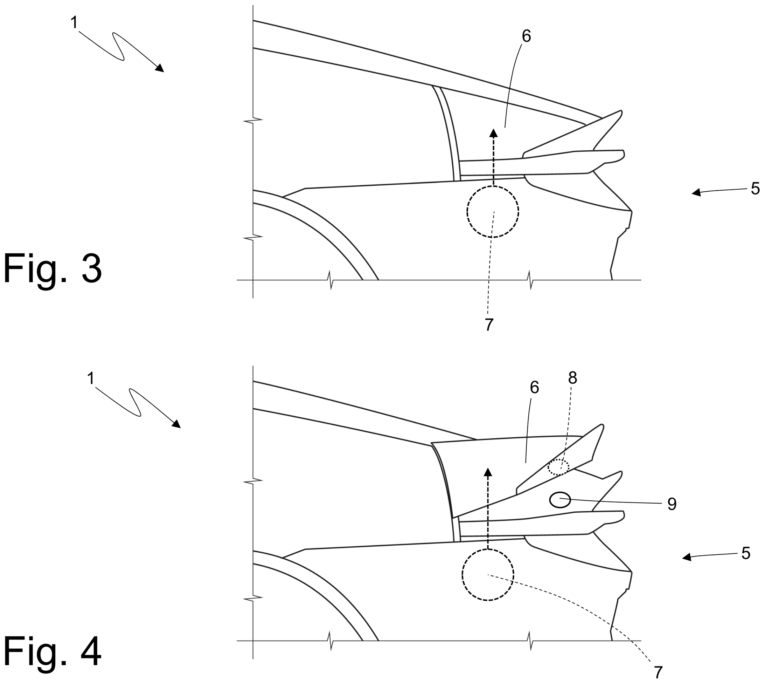

Two distinct rear aerodynamic elements 6 (in particular two spoilers) are provided which are distinct and separate from each other and are arranged at a certain distance from each other; in particular, the two aerodynamic elements 6 are arranged on the opposite sides of a rear window (illustrated in Figure 2). Each aerodynamic element 6 is mounted movable so as to move between a rest position (illustrated in Figure 3), in which the aerodynamic element 6 is arranged flush with the rest of the body 5, and a working position (illustrated in Figure 4), in which the aerodynamic element 6 is extracted (raised) with respect to the rest of the body 5. In the rest position (illustrated in Figure 3) each aerodynamic element 6 has the minimum aerodynamic drag and is also at the minimum distance from the rest of the body 5.

Therefore, each aerodynamic element 6 is coupled to an actuator device 7 of its own (schematically illustrated in Figures 3 and 4) which is configured to move the aerodynamic element 6 between the rest position (illustrated in Figure 3) and the working position (illustrated in Figure 4) and has an electric motor of its own. Preferably, each actuator device 7 is of the irreversible type, namely in the absence of power it is capable of keeping its position even with a load applied. For example, each actuator device 7, in order to be irreversible, comprises on its inside a helical worm screw that cooperates with a gear wheel that receives the motion from the electric motor; the pitch of the worm screw is suitably chosen in order to create sufficient friction between the worm screw and the gear wheel, such to make the actuator device 7 irreversible when the electric motor is not powered. In this manner, each aerodynamic element 6 remains in position even when the electric motors of the actuator devices 7 are not powered. Alternative embodiments of the actuator devices 7 are possible: for example, the actuator devices 7 can comprise pneumatic or hydraulic pistons.

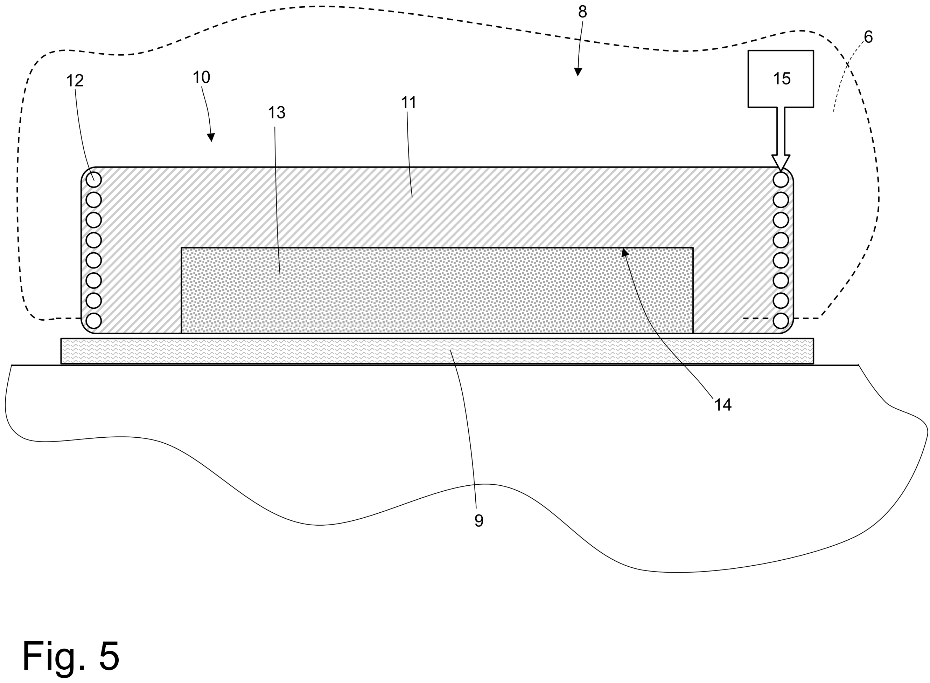

According to what is illustrated in Figures 4 and 5, each aerodynamic element 6 comprises two limit stop buffers 8 (only one of which is visible in Figure 4) which are integral with (fixed to) the aerodynamic element 6 and are separate and spaced apart from each other. According to other embodiments, each aerodynamic element 6 comprises a different number of limit stop buffers 8: from a minimum of one single limit stop buffer 8 to a maximum, for example, of three, four or five limit stop buffers 8.

Each limit stop buffer 8 (integral with a corresponding aerodynamic element 6) rests against a respective striker body 9 (visible in Figure 4) when the aerodynamic element 6 is in the rest position (illustrated in Figure 3). Namely the contact between each limit stop buffer 8 and the respective striker body 9 determines the stopping of the stroke (of the movement) of the corresponding aerodynamic element 6 and establishes the rest position (illustrated in Figure 3) of the corresponding aerodynamic element 6.

According to what is illustrated in Figure 5, each limit stop buffer 8 is configured to magnetically attract the respective striker body 9 (or, alternatively, vice versa). In particular, each limit stop buffer 8 comprises a means for generating a magnetic field; whereas, each striker body 9 can be made of ferromagnetic material (namely be a block of ferromagnetic material) or the striker body 9 can be a permanent magnet having a reversed magnetic polarity (so as to generate magnetic attraction) with respect to the magnetic field generated in the limit stop buffer 8.

According to a possible embodiment, the striker body 9 is part of the frame of the road vehicle 1 if the frame of the road vehicle 1 is made of ferromagnetic material (typically steel) or the striker body 9 is fixed (welded or screwed) to the frame of the road vehicle 1 if the frame of the road vehicle 1 is made of non-magnetic material (typically aluminium or composite material).

In particular, each limit stop buffer 8 comprises an electromagnet 10 configured to generate a magnetic field that determines a magnetic attraction with the striker body 9. In particular, the electromagnet 10 comprises a ferromagnetic armature 11 and a coil 12 that is wound around the ferromagnetic armature 11 and, when electric current flows through it, it generates a magnetic field inside the ferromagnetic armature 11. Furthermore, the electromagnet 10 is also coupled to a permanent magnet 13 which continuously generates a magnetic field of opposite direction and substantially equal intensity with respect to the magnetic field generated by the coil 12 through which current flows; in this manner, when no electric current flows through the coil 12, the electromagnet 10 generates (by means of the sole permanent magnet 13) on the outside a magnetic field which can attract the striker body 9, whereas when electric current flows through the coil 12, the electromagnet 10 does not generate on the outside a magnetic field that can attract the striker body 9, as the magnetic field generated by the permanent magnet 13 is cancelled by the magnetic field generated by the coil 12.

Namely, the electromagnet 10 is of the *"Energise-to-Release"* type (also called *"Electro-permanent magnet"* associating also the permanent magnet 13 with the electromagnet 10), as when the coil 12 is not powered, a magnetic field is generated on the outside of the electromagnet 10, whereas by powering the coil 12, the magnetic field on the outside of the electromagnet 10 is cancelled. In other words, the electric powering of the coil 12 is necessary for *"turning off"* the permanent magnet 13 (i.e. cancelling the magnetic field on the outside of the electromagnet 10).

According to a preferred embodiment, the armature 11 is provided with a seat 14 which houses the permanent magnet 13.

According to a possible (but not binding) embodiment, on the outer surface of each permanent magnet 13, a (thin) layer of elastic and non-ferromagnetic material is present which is interposed between the permanent magnet 13 and the respective striker body 9. In this manner, a direct contact between the permanent magnet 13 and the corresponding striker body 9 is avoided and thus a *"magnetic sticking"* is avoided (namely it avoids the permanent magnet 13 and the corresponding striker body 9 from joining with a magnetic attraction force that is too high and which becomes difficult to overcome when it is necessary to move the corresponding aerodynamic element 6 from the rest position to the working position). Furthermore, the layer of elastic material interposed between the permanent magnet 13 and the respective striker body 9 reduces the violence of the impact (and thus the noise generated at the moment of the impact) between the limit stop buffer 8 and the striker body 9 when the corresponding aerodynamic element 6 reaches the rest position.

The road vehicle 1 comprises a control unit 15 which is configured to apply an electric voltage to the coil 12 of the electromagnet 10 and thus to make an electric current circulate through the coil 12 of the electromagnet 10. The control unit 15 is configured to keep de-energized (namely without circulation of electric current) the coils 12 of the electromagnets 10 when the aerodynamic elements 6 have to be kept in the rest position (for example when the road vehicle 1 is turned off or still) and to energize (namely making the electric current circulate) the coils 12 of the electromagnets 10 when the aerodynamic elements 6 have to or can be moved or kept in the working position.

According to a possible embodiment, each striker body 9 is larger (and thus heavier, namely having a greater mass) than the corresponding electromagnet 10 so as to reduce the overall weight of the limit stop buffer 8 keeping an adequate attraction force between the limit stop buffer 8 and the striker body 9. In other words, mass is moved onto the striker body 9 to reduce the mass of the electromagnet 10 and thus make the limit stop buffer 8 lighter, which moves together with the corresponding aerodynamic element 6.

According to a preferred (but not binding) embodiment illustrated in the accompanying figures, the limit stop buffer 8 and the respective striker body 9 have a circular shape (namely a cylindrical shape).

In the embodiment illustrated in the accompanying figures, the electromagnets 10 are coupled to the limit stop buffers 8 of the aerodynamic elements 6, whereas the support bodies 9 comprise only passive ferromagnetic material (namely that does not generate any magnetic field); according to an alternative and equivalent embodiment, the electromagnets 10 are coupled to the support bodies 9, whereas the limit stop buffers 8 of the aerodynamic elements 6 comprise only passive ferromagnetic material (namely that does not generate any magnetic field). In other words, the electromagnets 10 can be coupled to the limit stop buffers 8 of the aerodynamic elements 6 or to the support bodies 9 integral with the frame.

In the embodiment illustrated in the accompanying figures, the road vehicle 1 is provided with two aerodynamic elements 6 independent of each other and arranged laterally. According to a different embodiment not illustrated, the road vehicle 1 is provided with one single aerodynamic element 6 arranged in a central position.

In the embodiment illustrated in the accompanying figures, the aerodynamic elements 6 are rear spoilers, namely "*whiskers*" which protrude upwards from the body 5 and constitute a seamless extension of the body 5; consequently, the airflow is forced to pass over each rear spoiler, namely to pass above the rear spoiler, without any possibility of passing under the rear spoiler. Alternatively, the aerodynamic elements 6 are rear wings, each of which comprises at least one wing profile that is arranged (in the working position) at a certain distance from the rest of the body 5 and is generally supported by a central support or two lateral supports; the wing profile (in the working position) is hit by the airflow both at its upper surface and at its lower surface and generates downforce using the same physical principle that allows airplanes to fly.

The embodiments described herein can be combined with one another.

The vehicle 1 described above has numerous advantages.

Firstly, in the vehicle 1 described above, each movable aerodynamic element 6 is kept in a stable manner (namely without undesired movements) in the rest position (illustrated in Figure 3) in which the aerodynamic element 6 is arranged flush with the rest of the body 5 thanks to the action of the electromagnets 10 which generate a magnetic attraction between each limit stop buffer 8 and the corresponding striker body 9.

Furthermore, in the vehicle 1 described above, the keeping (holding) of each aerodynamic element 6 in the rest position (illustrated in Figure 3) occurs thanks to a technical solution which is extremely simple, light, not very bulky, reliable, maintenance-free and easy and cost-effective to manufacture.

Finally, the magnetic attraction force between each limit stop buffer 8 and the corresponding striker body 9 can also have relatively high values (in the order of hundreds of Newtons for each electromagnet 10) ensuring a very stable keeping of the rest position, as the magnetic attraction force is cancelled (by energizing the coils 12 of the electromagnets 10) when wanting to move the aerodynamic elements 6 from the rest position to the working position. In this manner, the actuator devices 7 do not have to be oversized to overcome the magnetic attraction force between each limit stop buffer 8 and the corresponding striker body 9, as the magnetic attraction force is cancelled (by energizing the coils 12 of the electromagnets 10) when wanting to move the aerodynamic elements 6 from the rest position to the working position.

### LIST OF THE REFERENCE NUMERALS OF THE FIGURES

- 1: road vehicle
- 2: internal combustion engine
- 3: front wheels
- 4: rear wheels
- 5: body
- 6: aerodynamic elements
- 7: actuator device
- 8: limit stop buffer
- 9: striker body
- 10: electromagnet
- 11: armature
- 12: coil
- 13: permanent magnet
- 14: seat
- 15: control unit

## Claims

1. A vehicle (1) comprising:
a body (5); and
at least one aerodynamic element (6), which is movable between a first position and a second position different from the first position and is provided with at least one limit stop buffer (8), which is integral with the aerodynamic element (6) and rests against a striker body (9), when the aerodynamic element (6) is in the first position;
the vehicle (1) is **characterized in that** it comprises an electromagnet (10) configured to generate a magnetic attraction force between the limit stop buffer (8) and the striker body (9).

2. The vehicle (1) according to claim 1, wherein the electromagnet (10) is arranged in the limit stop buffer (8) and the striker body (9) is fixed to a frame of the vehicle (1).

3. The vehicle (1) according to claim 2, wherein the striker body (9) is at least partially made of a ferromagnetic material.

4. The vehicle (1) according to claim 2 or 3, wherein the striker body (9) is larger and heavier than the electromagnet (10).

5. The vehicle (1) according to one of the claims from 1 to 4, wherein the electromagnet (10) also comprises a permanent magnet (13) configured to generate at least part of the magnetic attraction force between the limit stop buffer (8) and the striker body (9).

6. The vehicle (1) according to claim 5, wherein the permanent magnet (13) is configured to generate all the magnetic attraction force between the limit stop buffer (8) and the striker body (9).

7. The vehicle (1) according to claim 5 or 6, wherein the electromagnet (10) is provided with a coil (12), which is configured to generate, when electric current flows through it, a magnetic field that completely cancels a magnetic field generated by the permanent magnet (13) so that, when the coil (12) is not powered, a magnetic field is generated outside the electromagnet (10), whereas when the coil (12) is powered the magnetic field is cancelled outside the electromagnet (10).

8. The vehicle (1) according to claim 7 and comprising a control unit (15) configured to keep the coil (12) de-energized when the aerodynamic element (6) has to be kept in the first position and to energize the coil (12) when the aerodynamic element (6) can be moved to the second position.

9. The vehicle (1) according to one of the claims from 5 to 8, wherein the electromagnet (10) comprises a ferromagnetic armature (11) provided with a seat (14), which houses the permanent magnet (13) and a coil (12) which is wound around the ferromagnetic armature (11).

10. The vehicle (1) according to one of the claims from 5 to 9, wherein on an outer surface of the permanent magnet (13) a layer of elastic and non-ferromagnetic material is present which is interposed between the permanent magnet (13) and the striker body (9).

11. The vehicle (1) according to one of the claims from 1 to 10, wherein the aerodynamic element (6) is provided with two limit stop buffers (8), which are spaced apart from each other and rest against two respective striker bodies (9), when the aerodynamic element (6) is in the first position.

12. The vehicle (1) according to one of the claims from 1 to 11, wherein the limit stop buffer (8) and the respective striker body (9) have a circular shape.

13. The vehicle (1) according to one of the claims from 1 to 12, wherein in the first position the aerodynamic element (6) has the smallest aerodynamic resistance and is thus arranged at the minimum distance from the rest of the body (5).
